# EUROPEAN PATENT SPECIFICATION

(11) **EP 1 728 290 B1**
(45) Date of publication and mention of the grant of the patent: **10.12.2008**
(21) Application number: 05715117.7
(22) Date of filing: 22.03.2005
(51) Int. Cl.: H01M 8/06, H01M 8/22

(54) **USE OF AN AMMONIA STORAGE DEVICE IN PRODUCTION OF ENERGY**
VERWENDUNG EINER AMMONIUM-SPEICHEREINRICHTUNG BEI DER HERSTELLUNG VON ENERGIE
UTILISATION D'UN DISPOSITIF DE STOCKAGE D'AMMONIAC DANS LA PRODUCTION D'ENERGIE

(30) Priority: 23.03.2004 DK 200400469
(43) Date of publication of application: 06.12.2006
(73) Proprietor: AMMINEX A/S, 2860 Søborg (DK)
(72) Inventor: CHRISTENSEN, Claus, Hviid, DK-3540 Lynge (DK); JOHANNESSEN, Tue, DK-2600 Glostrup (DK); NORSKOV, Jens, Kehlet, DK-2840 Holte (DK); QUAADE, Ulrich, DK-2880 Bagsvaerd (DK)
(74) Representative: Obenland, Sigrid
(86) International application number: PCT/DK2005/000196
(87) International publication number: WO 2005/091418

(56) References cited:
- FR-A- 1 421 033
- US-A- 4 848 994
- US-A1- 2001 042 378
- US-A1- 2001 053 342
- US-A1- 2003 219 371
- LIU CHUN YI ET AL: "Ammonia Absorption on Alkaline Earth Halides as Ammonia Separation and Storage Procedure" BULL. CHEM. SOC. JPN.; BULLETIN OF THE CHEMICAL SOCIETY OF JAPAN 2004, vol. 77, no. 1, 2004, pages 123-131, XP002369290
- WOJCIK A ET AL: "Ammonia as a fuel in solid oxide fuel cells" JOURNAL OF POWER SOURCES, ELSEVIER, AMSTERDAM, NL, vol. 118, no. 1-2, 25 May 2003 (2003-05-25), pages 342-348, XP004425701 ISSN: 0378-7753

## Description

### BACKGROUND OF THE INVENTION

### 1. Field of the Invention

This invention relates to the use of an ammonia storage device containing a metal ammine complex for reversible storage of ammonia in solid form. Upon release, ammonia is used either directly as a fuel in fuel cells or decomposed into dihydrogen and dinitrogen, which after an optional purification step can be used as a fuel in fuel cells.

### 2. Description of the Related Art

The potential advantages of using fuel cells have received significant attention. Application of dihydrogen or ammonia as a fuel, e.g., in fuel cells is attractive because it generates no polluting emissions [Hoogers, Thompsett, CatTech 2000, 3, 106]. In large-scale production facilities, dihydrogen or ammonia is produced from coal, naphtha or natural gas [Dybkjær, in Ammonia: Catalysis and Manufacture (Ed. Nielsen), Springer, 1995] and steam and air. This obviously generates CO₂ but by application of appropriate sequestration strategies [Lackner, Annu. Rev. Energy Environ. 2002, 27, 193], ammonia or dihydrogen can, if desired, be produced without any net release of carbon oxides. So far, the main focus has been on using dihydrogen as a fuel. However, this attractive application has been hindered due to problems of storing sufficient amounts of dihydrogen in gaseous and even in liquid forms [Schlapbach & Züttel, Nature 2001, 414, 353]. To overcome this difficulty, various solid hydrogen storage materials have been proposed but the gravimetric hydrogen storage capacity is still low and the reversible storage and release of hydrogen requires relatively high pressure and temperature. Currently, attention is focused at the use of complex chemical hydrides [WO 03/04553 A2] but there are still no materials that fulfil the specifications defined by The US Department of Energy [www.energy.gov]. Since dihydrogen cannot yet be stored with a sufficient volumetric efficiency, alternatives have been investigated. Among the most promising sources of dihydrogen, methanol has attracted significant attention both as a possible source of dihydrogen that can be easily transported or for use in the direct methanol fuel cell [Hogart, Prospects of the direct methanol fuel cell, Fuel cell technology handbook (2003)]. However, compared to dihydrogen or ammonia as a fuel this would require both central CO₂ sequestration at the methanol production facility and also decentral sequestration at each operating fuel cell, if all harmful contributions to the ecobalance should be avoided. Similar problems are necessarily encountered with all other carbon-containing fuels for fuel cells, such as e.g., methane, gasoline, diesel and ethanol. Ammonia is already produced in large facilities with daily production capacities that can be in excess of 3000 metric tons. It has been calculated that in terms of overall efficiency, ammonia is an attractive alternative to methanol [Metkemeijer & Achard, Int. J. Hydrogen Energy 1994, 19, 535].

Ammonia or ammine complexes, i.e. coordination compounds in which ammonia is bound to a metal ion have been known since the 19^{th} century and many such compounds are today considered classical inorganic compounds. In the early literature, ammine complexes were often formed by reaction of metal salts with gaseous ammonia. Similarly, in many cases it was shown that new compounds containing less or even no ammonia could be formed by controlled thermal degradation of various ammine complexes.

It is well-know in the art that ammonia can be used directly as a fuel for certain high-temperature fuel cells [Wojcik, Middleton, Damopoulos, van Herle, J.Power Sources, 2003, 118, 342]. Similarly, it is known that ammonia can be decomposed catalytically to mixtures of dihydrogen, dinitrogen and unreacted ammonia, which can be used directly as a fuel in e.g., alkaline fuel cells (AFC) [Kordesch et al., J.Power Sources 2000, 86, 162], but only after removal of ammonia traces in other types, such as in proton exchange membrane (PEM) fuel cells [Chellappa et al., Appl. Catal. A., 2002, 227, 231]. Currently, an Infrastructure that allows transportation of liquid ammonia, primarily for use in agriculture, already exists. Furthermore, ammonia is one of the chemicals of which the largest amount is produced on a worldwide basis. Thus, there are many possible advantages of using ammonia for reversible hydrogen storage. However, one particular disadvantage has prohibited the possibility for developing this technology, and this is the difficulty of convenient and safe transportation of ammonia [Schlögl, Angew. Chem. Int. Ed. 2003, 42, 2004]. The use of ammonia stored as liquid in pressurized containers at room temperature may result in uncontrolled release of large quantities of toxic ammonia In case of physical damage on a container. It is an object of the present invention to overcome this difficulty and to make efficient use of ammonia as a fuel in fuel cells and/or as a source of dihydrogen also for use in fuel cells.

US 2003/219371 A1 discloses a fuel cell comprising an urea/water storage which generates ammonia that is directly used in a fuel cell or dissociated into hydrogen and nitrogen in a reactor and then fed to a fuel cell.

it has been suggested that such metal-ammine complexes might be used to increase the efficiency of ammonia production plants by allowing easy separation of ammonia from the equilibrium mixture by pressure swing adsorption [Liu & Aika, Chem. Lett. 2002, 798].

Furthermore, ammine complexes have been demonstrated for use in connection with cooling and refrigeration, where absorption desorption cycles are employed for efficient cold production.

The present invention is clearly distinguished from these two applications of the reversible absorption of ammonia in metal salts in that the invention regards the use of said complexes as energy carriers, thereby placing the invention within an entirely different technical field.

### SUMMARY OF THE INVENTION

In a first aspect the invention relates to an electric power generating unit comprising
(i) an ammonia storage device in the form of a container comprising an ammonia absorbing and releasing salt of the general formula: Mₐ(NH₃)ₙX_{z}, wherein M is one or more cations selected from alkali metals, alkaline earth metals, and transition metals such as Li, Na, K, Cs, Mg, Ca, V, Cr, Mn, Fe, Co, Ni, Cu, or Zn or combinations thereof such as NaAl, KAl, K₂Zn, CsCu, or K₂Fe, X is one or more anions selected from fluoride, chloride, bromide, iodide, nitrate, thiocyanate, sulphate, molybdate, phosphate, and chlorate ions, a is the number of cations per salt molecule, z is the number of anions per salt molecule, and n is the coordination number of 2 to 12,
(ii) means for heating said container and ammonia absorbing and releasing salt for releasing ammonia gas and
(iiia) a fuel cell for converting ammonia directly into electric power; or
(iiib1) a reactor for dissociating ammonia into hydrogen and nitrogen and
(iiib2) a fuel cell for converting hydrogen into electric power.

In a second aspect the invention relates to the use of an ammonia storage device in the form of a container comprising an ammonia absorbing and releasing salt of the general formula: Mₐ(NH₃)ₙX_{z}, wherein M is one or more cations selected from alkali metals, alkaline earth metals, and transition metals such as Li, Na, K, Cs, Mg, Ca, V, Cr, Mn, Fe, Co, Ni, Cu, or Zn or combinations thereof such as NaAl, KAI, K₂Zn, CsCu, or K₂Fe, X is one or more anions selected from fluoride, chloride, bromide, Iodide, nitrate, thiocyanate, sulphate, molybdate, phosphate, and chlorate ions, a is the number of cations per salt molecule, z is the number of anions per salt molecule, and n is the coordination number of 2 to 12 as a source of energy in a electric power generating unit comprising
(1) means for heating said container and ammonia absorbing and releasing salt for releasing ammonia gas,
(2a) a fuel cell for converting ammonia directly into electric power; or comprising
(2b1) a reactor for dissociating ammonia into hydrogen and nitrogen and
(2b2) a fuel cell for converting hydrogen into electric power.

### Brief Description of the Drawings

The Invention is disclosed more in detail with reference to the drawings in which
Fig.1 schematically shows parts of an embodiment of a power generating unit according to the invention,
Fig. 2 schematically shows parts of a preferred embodiment of a power generating unit according to the invention, and
Fig. 3 schematically shows parts of another preferred embodiment of a power generating unit according to the invention.
Figs. 4 and 5 are diagrams showing the release of ammonia from Ni(NH₃)₆Cl₂ and Mg(NH₃)₆Cl₂, respectively, upon heating.
Figs. 6-10 show x-ray diffraction patterns of ZnCl₂, CuSO₄, MgCl₂ and NiCl₂, respectively, after exposure to 1 bar of gaseous ammonia at room temperature.
Figs. 11 and 12 show x-ray diffraction patterns of MgCl₂ after absorbing and desorbing ammonia and after a second absorption, respectively.
Fig. 13 is a diagram showing pressure oscillations of ammonia in a buffer volume, when the heating is turned on/off.
Fig. 14 is a diagram showing temperature oscillations of a Mg(NH₃)Cl₂ system as a result of turning an electric resistive heating on/off.
Fig. 15 is a diagram showing the hydrogen production from the decomposition of ammonia over Ru or Ba/Ru as a function of the temperature.

### Detailed Description of the Present Invention

The present Invention is based on the use of an ammonia storage device holding metal-ammine salts as solid storage media for ammonia, which in tum is used, either in its pure form or after decomposition to a gas mixture containing dinitrogen and dihydrogen, as a feedstock for an energy pro-ducing unit such as a fuel cell. The metal-ammine salt is a salt that releases ammonia upon heating, during which it acts as an ammonia releasing salt. After all, or part of, the contained ammonia is released from the metal-ammine, it is possible to adsorb ammonia to the resulting solid, and the salt acts as an ammonia absorbing salt. Thus, the metal-ammine salt constitutes a reversible solid storage medium for ammonia, which represent a safe and practical option for storage and transportation of ammonia. Ammonia is typically released from the preferred metal ammine salt by heating the salt to temperatures in the range of 10-550 °C.

The present invention may be used for large energy producing facilities, and by use of small rechargeable and/or replaceable ammonia storage containers combined with micro-fabricated/miniaturized ammonia decomposition reactors, it is also possible to provide energy for mobile units and portable devices such as a laptop computer.

Solid ammonia storage media according to the present invention may contain substances that bind ammonia in the form of a chemical complex. These include ionic salts, particularly chlorides and/or sulphates of one or more alkali metals, alkaline earth metals and/or one or more 3d subgroup elements. The ionic salts include MgCl₂, MgBr₂, Mg(ClO₄)₂, ZnCl₂, Zn(NO₃)₂, ZnBr₂, ZnI₂, ZnSO₄, K₂ZnCl₄, (NH₄)₂ZnCl₄, (NH₄)₃ZnCl₅, Ca(NO₃)₂, CaBr₂, CaI₂, CaCl₂, Ca(ClO₄)₂ BaCl₂, BaBr₂, Bal₂, Ba(NO₃)₂, BeCl₂, FeCl₂, Fe(NO₃)₂, FeCl₃, FeBr₂, FeI₂, FeSO₄, Fe(CNS)₂, K₂FeCl₅ SrCl₂, SrBr₂, SrI₂, Co(NO₃)₂, CoCl₂, CoBr₂, CoI₂, CoSO₄, Co(CNS)₂, CoCl₃, NiCl₂, NiI₂, NiSO₄, Ni(NO₃)₂, Ni(ClO₄)₂, MnCl₂, MnBr₂, Cu(NO₃)₂, CuCl₂, CuBr₂, CuI₂, CuSO₄, CrCl₂, NH₄AlCl₄, KAlCl₄, NH₄Cl, NaBr, CsCuCl₃, TaCl₂, SnCl₂, PbCl₂, Li₂SO₄, Li₃PO₄ and LiCl₂.

The present invention relates to an electric power generating unit comprising
(i) an ammonia storage device in the form of a container comprising an ammonia absorbing and releasing salt of the general formula: Mₐ(NH₃)ₙX_{z}, wherein M is one or more cations selected from alkali metals, alkaline earth metals, and transition metals such as Li, Na, K, Cs, Mg, Ca, V, Cr, Mn, Fe, Co, Ni, Cu, or Zn or combinations thereof such as NaAl, KAl, K₂Zn, CsCu, or K₂Fe, X is one or more anions selected from fluoride, chloride, bromide, iodide, nitrate, thiocyanate, sulphate, molybdate, phosphate, and chlorate ions, a is the number of cations per salt molecule, z is the number of anions per salt molecule, and n is the coordination number of 2 to 12,
(ii) means for heating said container and ammonia absorbing and releasing salt for releasing ammonia gas and
(iiia) a fuel cell for converting ammonia directly into electric power; or
(iiib1) a reactor for dissociating ammonia into hydrogen and nitrogen and
(iiib2) a fuel cell for converting hydrogen into electric power.

The use of ammonia storing materials in connection with energy storage is considered new. The ability of metal ammines to absorb and to desorb ammonia is well known in the literature, but their potential as energy carriers has not been proposed until now. This finding and the demonstration of the use of these salts as viable energy carriers lies far from all existing technology, and the high energy densities of same materials provides a leap as compared to the feasible storage densities for hydrogen. Furthermore, the system is remarkably safe compared to virtually all other energy carriers, and especially the known hydrogen storage media. At the same time, metal ammine salts can release ammonia/hydrogen at much higher rates than what is possible for comparable solid hydrogen storage media. Summing up, metal amine salts solves a number of problems hampering the use of the existing media for energy storage by providing higher energy density, improved user safety, simpler handling and transport, good compatibility with most or all known types of fuel cells and/or more favorable release kinetics than existing technologies for storing fuel for fuel cells.

A power generating unit of the invention may be a disposable unit for use in devices having limited expected time of use and where a high density of energy is desirable as a replacement of traditional battery technology in e.g. laptop computers, or as source of energy for e.g. radio transmitters for use in deserted areas or in space.

According to a preferred embodiment of the invention the electric power generating unit comprises means for adding ammonia to saturate the ammonia absorbing and releasing salt with ammonia rendering the unit rechargeable which is preferred for uses in which the consumption of energy is considerable as compared to the ammonia storing capacity of the unit.

During release of ammonia the original complex metal-ammine salt of the formula Mₐ(NH₃)ₙX_{z} is gradually transformed into another complex of the formula Mₐ(NH₃)ₘ,X_{z} wherein m<n. When all the desired ammonia has been released, the resulting Mₐ(NH₃)ₘX_{z} may be converted back into Mₐ(NH₃)ₙX_{z} by an absorption treatment with an ammonia-containing gas stream. Preferably, the adsorption of ammonia is carried at a temperature below 100 °C simply by passing the ammonia containing gas through the ammonia absorbing salt.

Typical hydrogen contents of the metal ammine complexes are in the range of 3-14wt%, preferably above 5 wt%. For several metal-ammine salts it is possible to release all ammonia and then transform the resulting material back into the original metal-ammine salt in a large number of cycles. This obviously constitutes preferred embodiments. For mobile units and for small portable devices, it is particularly useful to hold the metal-ammine in a container that can be detached from the fuel cell and recharged with ammonia in a separate recharging unit.

Typical ammonia contents of the metal ammine complexes are typically in the range of 20-60 wt%, preferably above 30 wt%. In a preferred embodiment of the invention the ammonia absorbing and releasing salt is Mg(NH₃)₆Cl₂, which contains 51.7 wt% ammonia. Thus, the present invention offers ammonia storage at significantly higher densities (both on a volume and a weight basis) than both aqueous ammonia and aqueous urea nearly approaching the ammonia volume density of liquid ammonia.

A solid storage medium containing magnesium chloride is advantageously used. At ambient conditions magnesium chloride stores up to 6 molecules of ammonia per magnesium ion, forming Mg(NH₃)₆Cl₂. This storage medium has an approximate density of 1.2 grams/cm³, leading to a stored amount of 620 grams ammonia per litre storage medium. If the hydrogen in this ammonia is released by decomposition, 109 grams hydrogen can be delivered. This hydrogen density is comparable to the theoretical hydrogen density of complex hydrides as NaBH₄ or LiAlH₄, while the storage media of the current invention are both safer and more convenient from a technological point of view.

Using Mg(NH₃)₆Cl₂, the ammonia vapour pressure at 25°C will be only 0.002 bar, building up to approximately 8 bar at 200 °C. A device according to the present invention can advantageously be operated so that the ammonia pressure is between 1.5 and 10 bar.

In another preferred complex of Li(NH₃)₄)Cl or Li(NH₃)₅)Cl the ammonia contents is as high as 62 wt% and 67 wt%, respectively.

In a preferred embodiment of the invention the salt is in the form of a fine powder of micro crystals or located on a porous support material, which facilitates the handling thereof and the keeping in the storage device.

In one embodiment of the invention the means for heating is in the form of an electrical resistive heating device.

Heat required to release the ammonia may be generated by electrical resistive heating being simple to control, but may also be generated by an exothermic chemical reaction wherein ammonia or hydrogen is oxidized in a manner known per se and/or by heat exchange with the energy producing unit.

Supplying power to microelectronic of micro-electromechanical systems suffers from the paradox that the power-generating unit is often larger than the device itself and for remote and autonomous operation the energy density has to be increased dramatically as compared to even the best lithium-ion battery technology [Holladay, Jones, Phelps and Hu, J.Power Sources 108 (2002) 21-27]. To increase the energy density micro sized fuel cells are developed, but again the main problem is storage of e.g. hydrogen as fuel. The use of hydrocarbons or alcohols such as methanol requires many steps of evaporating, reforming and CO cleanup together with handling of both liquid and gas phases being difficult to integrate and control on a chip. The ammonia storage device combined with an ammonia tolerating fuel cell greatly simplifies the integration and control on a chip and increases the energy density by an order of magnitude compared to battery technology.

For very small scale applications the entire container and means for heating are micro fabricated using processes such as mechanical grinding, chemical vapour deposition (CVD), plasma enhanced chemical vapour deposition (PECVD), electron cyclotron resonance (ECR), sputtering, etching, lithographic methods such as electron beam lithography, photo lithography, or laser lithography.

Micro size power generating units according to the invention may be micro fabricated using processes known per se such as mechanical grinding, chemical vapour deposition (CVD), plasma enhanced chemical vapour deposition (PECVD), electron cyclotron resonance (ECR), sputtering, etching, lithographic methods such as electron beam lithography, photo lithography, or laser lithography.

When dissociating ammonia into hydrogen and nitrogen before use in accordance with an embodiment of the invention, a reactor for dissociating ammonia preferably contains a heterogeneous catalyst for accelerating the processes and reducing the energy input needed.

When dissociating ammonia into hydrogen and nitrogen it is in some cases preferred to purify the gas for remaining ammonia before feeding the gas to the fuel cell. Such gas purification may be performed using either an acidic aqueous solution such as 2M H₂SO₄ or an ammonia absorbing salt of the formula MₐX_{z}-type such as MgCl₂. By both methods, residual ammonia levels may be decreased to below 10 ppm. According to the present invention, this purification step can also be carried out using solid acidic media, high surface area compounds such as activated carbon and/or other ammonia absorbing salts of the MₐX_{z}-type.

A heterogeneous catalyst suitably comprises a support carrying an active phase. The support consists of a thermally stable material with a high surface area such as a ceramic, facilitating dispersion of the active phase

It is preferred that the active phase comprises dispersed nanoparticles (having a size in the range up to 100 nanometres) of transition metals or compounds thereof such as Co₃Mo₃N, Ru, Co, Ni and Fe or mixtures thereof. The active phase is preferably promoted with alkali metals or alkaline earth metals such as K, Ca, and/or Ba.

A power generating unit according to the invention may further comprise a combustion device wherein a part of the hydrogen produced in the reactor, unreacted hydrogen from the fuel cell or a mixture thereof is oxidized for providing heat for heating the ammonia storage device for providing energy required for carrying out the processes in the power generating unit.

In cases where ammonia is decomposed into dihydrogen and dinitrogen, the required heat may similarly be generated by electrical resistive heating and/or from an exothermic reaction and/or by heat exchange with the energy producing unit. The preferred method of heating depends on which type of fuel cell is used, and particularly on the operating temperature of the fuel cell. However, in all cases there is a significant advantage of supplying the heat necessary for ammonia desorption and for the possible ammonia decomposition directly from the fuel cell through electrical resistive heating or indirectly through heat exchange either with the fuel cell itself or from heat generated by controlled combustion of the exit gas from the fuel cell. The heat can also be generated by directly using a minor fraction of the dihydrogen from the decomposition unit in a combustion reaction.

The heat can also be generated by directly using a minor fraction of the dihydrogen from the decomposition unit in a combustion reaction. If the invention is used with an alkaline fuel cell operating at elevated temperature (typically up to 260°C), a preferred option is to use an ammonia absorbing and desorbing salt releasing ammonia below the operating temperature of the fuel cell.

In a preferred embodiment of the invention the power generating unit further comprises a combustion device wherein a fraction of the hydrogen produced in the reactor, unreacted hydrogen from the fuel cell or a mixture thereof is oxidized for providing heat for heating said reactor for dissociating ammonia.

In another preferred embodiment of the invention the power generating unit further comprises a combustion device wherein a fraction of the ammonia released from the ammonia storage, unreacted ammonia from the fuel cell or a mixture thereof is oxidized for providing heat for heating said ammonia storage device.

In a further preferred embodiment of the invention the power generating unit further comprises a combustion device wherein a fraction of the ammonia released from the ammonia storage, unreacted ammonia from the fuel cell or a mixture thereof is oxidized for providing heat for heating said reactor for dissociating ammonia.

It is especially preferred when the constituents of a power generating unit according to the invention are dimensioned to provide full balancing of the complete unit reducing the volume of and energy loss in the electric power generating unit. Balancing the unit will consist of optimizing tube dimensions, flows, insulation, temperatures etc. to obtain the optimal output of electrical energy from the electric power generating unit.

The power generating unit according to the invention is especially suitable for providing a micro-size power source for microelectronic devices or micro-electro-mechanical-systems (MEMS).

A reactor for dissociating ammonia is preferably a part of a micro-size electric system being micro fabricated using processes known per se such as mechanical grinding, chemical vapour deposition (CVD), plasma enhanced chemical vapour deposition (PECVD), electron cyclotron resonance (ECR), sputtering , etching, lithographic methods such as electron beam lithography, photo lithography, or laser lithography.

According to the invention it is possible to divide the reactor for dissociating ammonia into two parts, one part being operated at a low temperature that dissociates most ammonia and another part being operated at a high temperature that dissociates the last present fraction of ammonia. Such setup reduces the area to be held at high temperature, thus reducing the amount of heat loss.

In another aspect the invention relates to the use of an ammonia storage device in the form of a container comprising an ammonia absorbing and releasing salt of the general formula: Mₐ(NH₃)ₙX_{z}, wherein M is one or more cations selected from alkali metals, alkaline earth metals, and transition metals such as Li, Na, K, Cs, Mg, Ca, V, Cr, Mn, Fe, Co, Ni, Cu, or Zn or combinations thereof such as NaAl, KAl, K₂Zn, CsCu, or K₂Fe, X is one or more anions selected from fluoride, chloride, bromide, iodide, nitrate, thiocyanate, sulphate, molybdate, phosphate, and chlorate ions, a is the number of cations per salt molecule, z is the number of anions per salt molecule, and n is the coordination number of 2 to 12 as a source of energy in a electric power generating unit comprising
(1) means for heating said container and ammonia absorbing and releasing salt for releasing ammonia gas,
(2a) a fuel cell for converting ammonia directly into electric power; or comprising
(2b1) a reactor for dissociating ammonia into hydrogen and nitrogen and
(2b2) a fuel cell for converting hydrogen into electric power.

In one embodiment of this aspect the electric power generating unit according further comprises means for adding ammonia to saturate the ammonia absorbing and releasing salt with ammonia rendering the unit rechargeable.

In a preferred use of the invention the ammonia absorbing and releasing salt is Mg(NH₃)₆Cl₂ offering very high density of ammonia storage and enabling working the unit at a relatively low pressure.

It is preferred to use the salt is in the form of a fine powder of micro crystals or located on a porous support material.

In one embodiment of the invention an electrical resistive heating device is used as the means for heating.

In another embodiment of the invention chemical reactions are used for providing heating.

In a preferred use the container and means for heating are a part of a micro-size electric system being micro fabricated using processes known per se such as mechanical grinding, chemical vapour deposition (CVD), plasma enhanced chemical vapour deposition (PECVD), electron cyclotron resonance (ECR), sputtering , etching, lithographic methods such as electron beam lithography, photo lithography, or laser lithography.

When a reactor for dissociating ammonia is used, it preferably contains a heterogeneous catalyst catalyst for accelerating the processes and reducing the energy input needed.

When used, the heterogeneous catalyst preferably comprises a support and an active phase.

It is preferred to use an active phase comprises dispersed nanoparticles of transition metals or compounds thereof such as Co₃Mo₃N, Ru, Co, Ni and Fe or mixtures thereof.

In the use of the invention the power generating unit may further comprise a combustion device wherein a part of the hydrogen produced in the reactor, unreacted hydrogen from the fuel cell or a mixture thereof is oxidized for providing heat for heating the ammonia storage device for providing energy required for carrying out the processes in the power generating unit.

In one preferred use according to the invention the power generating unit further comprises a combustion device wherein a fraction of the hydrogen produced in the reactor, unreacted hydrogen from the fuel cell or a mixture thereof is oxidized for providing heat for heating said reactor for dissociating ammonia.

In another preferred use according to the invention the power generating unit further comprises a combustion device wherein a fraction of the ammonia released from the ammonia storage, unreacted ammonia from the fuel cell or a mixture thereof is oxidized for providing heat for heating said ammonia storage device.

In a further preferred use of the invention the power generating unit further comprises a combustion device wherein a fraction of the ammonia released from the ammonia storage, unreacted ammonia from the fuel cell or a mixture thereof is oxidized for providing heat for heating said reactor for dissociating ammonia.

According to a preferred use according to the invention the constituents of the power generating unit are dimensioned to provide full balancing of the complete unit reducing the volume of and energy loss in the electric power generating unit. Balancing the unit will consist of dimensioning tubes, chambers, flows, insulation, temperatures etc. to obtain the optimal output of electrical energy from the electric power generating unit.

In a preferred use according to the invention the power generating unit is in the form of a micro-size power source for microelectronic devices or micro-electro-mechanical-systems (MEMS).

In a preferred embodiment of the invention a reactor for dissociating ammonia being divided into two parts is used, one part operated at a low temperature that dissociates most ammonia and another part operated at a high temperature that dissociates the last present fraction of ammonia.

### Description of the Preferred Embodiments

The invention is now explained more in detail with reference to the drawings showing flow charts of preferred embodiments of a plant for working the Invention.

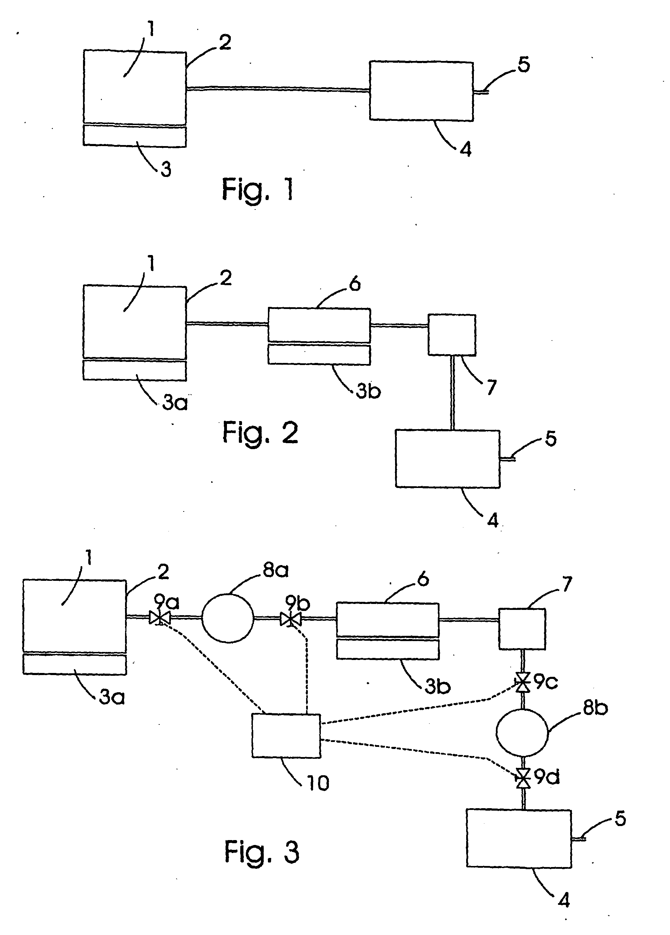

Reference is made to figure 1 schematically showing parts of a power generating unit according to the invention. The unit has a solid ammonia storage medium 1, placed in a container 2 which can be heated using a heating device 3. The size of container 2 and accordingly the amount of solid ammonia storage medium may be scaled according to the requirement for energy storage capacity of the specific application of the invention. As systems according to the present invention may have sizes ranging from micro to mega scale, the storage capacity must vary accordingly.
Substances that are able to store ammonia at ambient conditions (approximately 20°C and 1 bar) only building up low ammonia pressures (<1 bar) in closed systems are preferred for use as solid ammonia storage media according to the invention.

In a preferred embodiment of the invention the solid ammonia storage material can be reloaded by adding gaseous or liquid ammonia to the storage container 2 through a filling nozzle, the storage material then absorbing ammonia at ambient temperature.

The heating device 3 can use either resistive electric heating or one of several possible chemical processes for heating the solid ammonia storage medium. Preferable chemical reactions for generation of heat could be the combustion of residual hydrogen from the exhaust 5 of the electrochemical power generating unit 4 or of part of the ammonia released from the solid storage medium. Such combustions could advantageously be carried out over a catalyst.

In one preferred embodiment, the electrochemical power generating unit 4 is a fuel cell running directly on ammonia. This fuel cell could advantageously be of the SOFC or AFC type.

Figure 2 shows another embodiment of a power generating unit of the invention in which the electrochemical power generating unit could be a fuel cell running on hydrogen. In this application, ammonia from the solid ammonia storage 1 is passed over a heterogeneous ammonia decomposition catalyst 6. The catalyst decomposes ammonia into hydrogen and nitrogen. Preferred catalysts for this decomposition could be deposited on a support, and the active phase could contain dispersed nanoparticles of Co3Mo3N, Ru, Co, Ni or Fe or mixtures thereof. If a sufficient amount of catalyst is used at 1 bar and 300°C the residual amount of ammonia at equilibrium is only 1.9 %. Heat energy for the decomposition catalyst 6 is supplied from heating element 3b using energy obtained in the same ways as described for heating element 3a. In one preferred embodiment, the container 2 and decomposition catalyst 6 are integrated into one unit, allowing heat for both reactors to be provided by the same heating element.

If the introduction of small amounts of ammonia into the electrochemical power generating device is undesirable (as in the case of the device being a fuel cell of the PEM type), the gas mixture can be cleaned in a separate or integrated unit 7. This unit could consist of an absorbent as an acidic zeolite or an ionic salt of the type also feasible as solid ammonia storage materials. In another embodiment, this gas cleaning could be done using a membrane for separation of hydrogen from the other constituents of the gas. In a preferred embodiment, this membrane could be made of Pd.

In figure 3 is shown a further preferred embodiment in which the system is built as described in connection with the embodiment of figure 2 and further being provided with optional buffer volumes 8a and/or 8b and one or more magnetically actuated valves 9a-9d. An electronic controller 10 monitors and controls flows and heating adjusting it to the fuel requirement of the electrochemical power generating device.

### Specific examples of systems according to the present Invention

The invention is further elucidated In detail in the below specific examples of working the Invention.

### Example 1: Ammonia desorption from metal ammine halides

Absorption of ammonia is exemplified by Ni(NH₃)₆Cl₂ and Mg(NH₃)₆Cl₂.

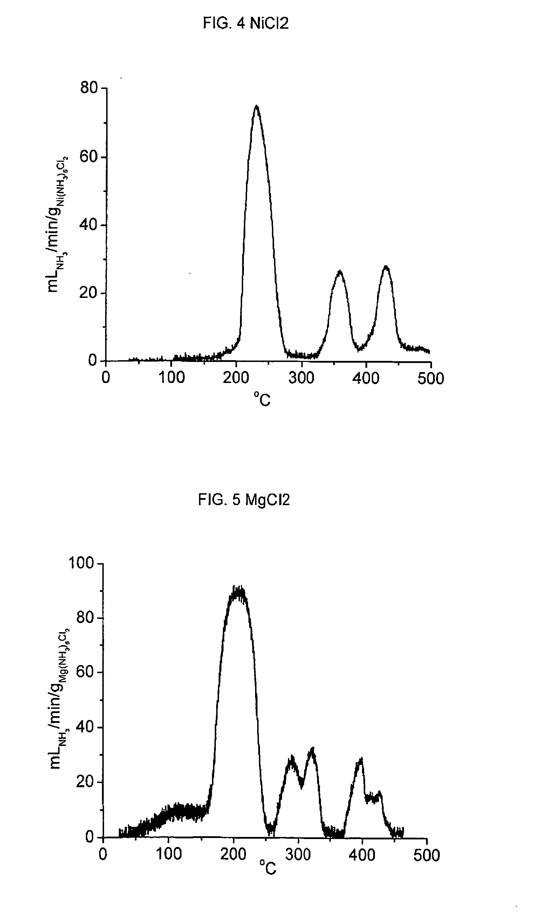

Release of ammonia from Ni(NH₃)₆Cl₂ was accomplished by placing 1.1 grams of Ni(NH₃)₆C1₂ in a container of 10 millilitres internal volume equipped with a single outgoing tube connected to flow measuring apparatus. The container was sealed, and heated by resistive electric heating at an increase of temperature of 0.2°C/min. The resulting flow of ammonia is shown in figure 4, and the integral liberated amount constitutes the entire theoretical amount of 6 moles NH₃ pr. mole NiCl₂ within the measurement error.

Similar tests were performed with Mg(NH₃)₆Cl₂ to exemplify desorption from alkaline earth metal ammine halides. The resulting flow of ammonia is shown in figure 5, and the integral liberated amount again constitutes the entire theoretical amount of 6 moles NH₃ pr. mole MgCl₂ within the measurement error.

### Example 2: Uptake of gaseous ammonia in metal salts of the general structure MₐX_{z}.

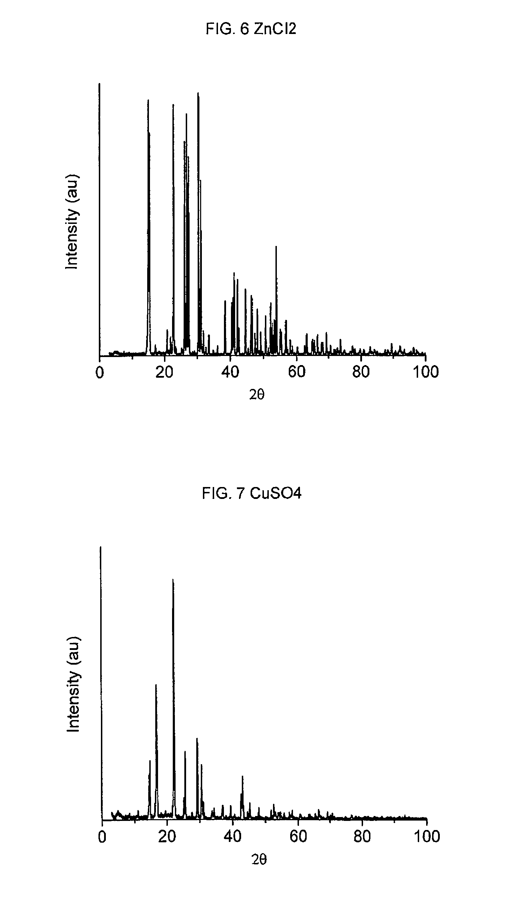

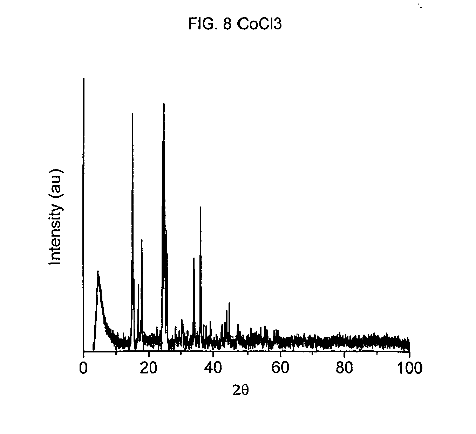

Salts of the general formula MₐX_{z} were exposed to gaseous ammonia and the absorption was investigated using x-ray diffraction. ZnCl₂, CuSO₄, CoCl₃, MgCl₂ and NiCl₂ were investigated after exposure to gaseous ammonia at 1 bar pressure and room temperature. The results are shown in figures 6-10. One further experiment showed that ammonia absorption of MgCl₂ was complete in less than 20 min at 8 bar ammonia pressure.

### Example 3: Reversibility of the absorption desorption cycle

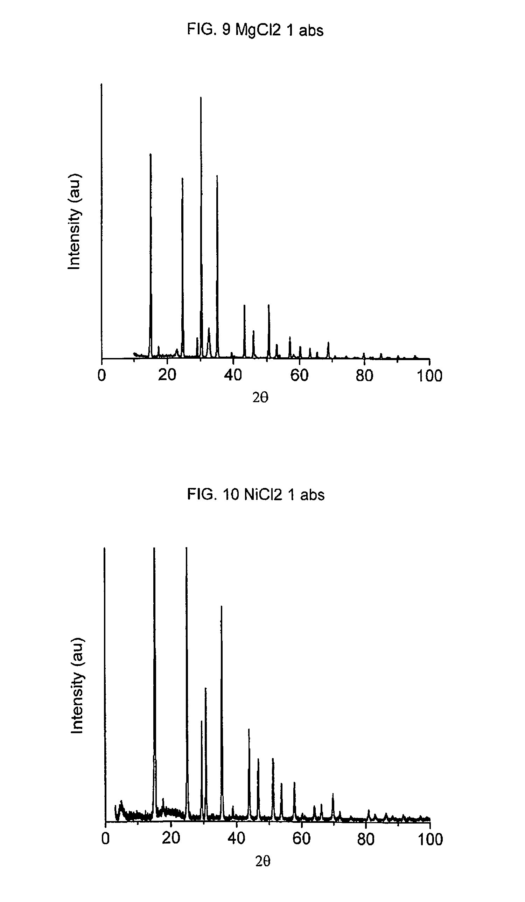

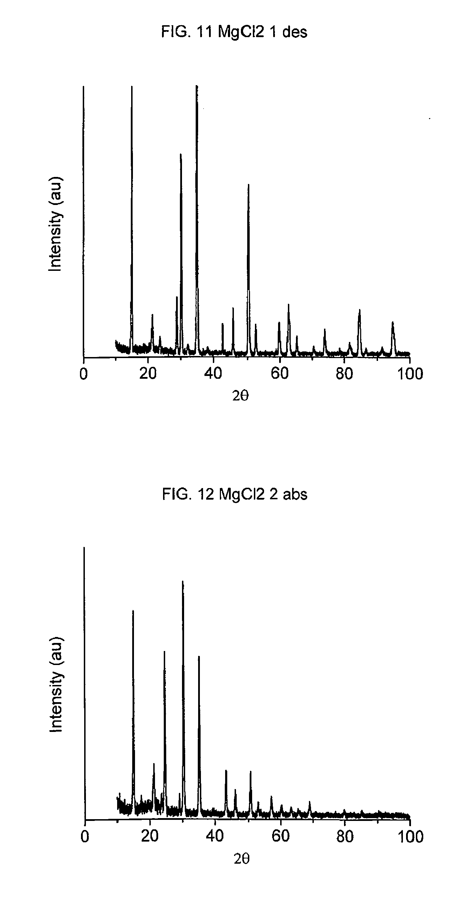

The reversibility of the absorption cycles were investigated by x-ray diffraction of MgCl₂ after absorption and subsequent desorption, figure 11, and after a second absorption, figure 12. When compared with figure 9 it is found that the changes In crystal structure during absorption/desorption of ammonia are reversible.

### Example 4: Preparation of An electric power generating unit according to the invention.

A unit according to the present invention, delivering hydrogen for a PEM fuel cell was constructed. This unit comprised a container for ammonia storage compound, a buffer chamber for gaseous ammonia (approx. 200 millilitres), a device for flow regulation, a heated catalyst for ammonia decomposition, a scrubber for removal of residual ammonia and a PEM fuel cell delivering power for an electric motor.

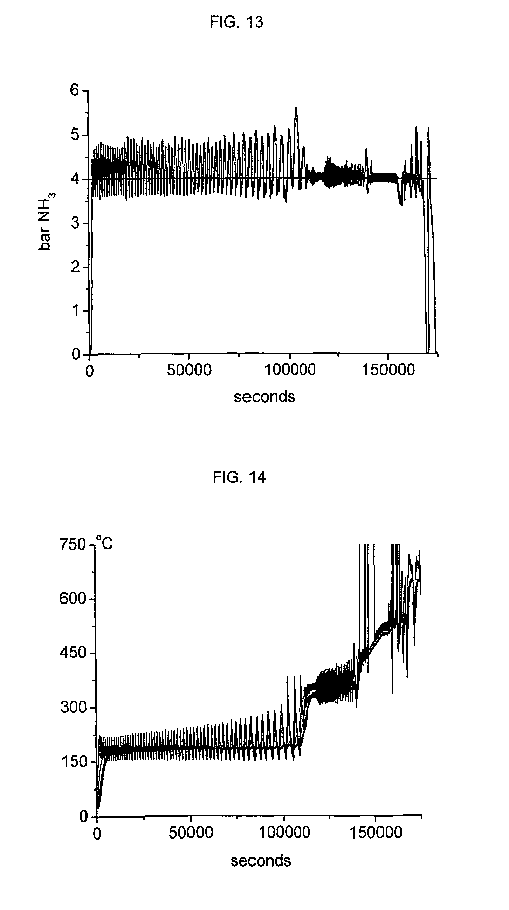

In order to demonstrate the feasibility of the invention, Mg(NH₃)₆Cl₂ was used as ammonia storage compound In the container. The container was heated by electric resistive heating. Figure 13 shows characteristics of the pressure development in the buffer volume when ammonia was vented dynamically to the remaining system at an average rate of 70 millilitres/min. As the heating in this embodiment was regulated on/off after a simple pressure criterion, the temperature oscillated as appears from figure 14. This leads to the oscillations in pressure seen in figure 13 Apart from the oscillations in temperature, three distinct plateaus are recognised. These correspond to the three stages of ammonia desorption from Mg(NH₃)₆Cl₂ also recognised in figure 5.

After leaving the flow controlling device, ammonia was passed through a reactor for decomposing ammonia into nitrogen and hydrogen. This reactor was equipped with 1.0 grams of an iron based catalyst, and heated by electric resistive heating.

In this embodiment, the last process before the gas enters the fuel cell was removal of remaining ammonia from the catalytic reactor.
This gas purification has been performed using either an acidic aqueous solution (e.g. 2M H₂SO₄) or an ammonia absorbing salt of the MₐX_{z} type (for example MgCl₂). By both methods, residual ammonia levels could be decreased below 10 ppm.

### Example 5: Dissociation of ammonia in a micro fabricated reactor.

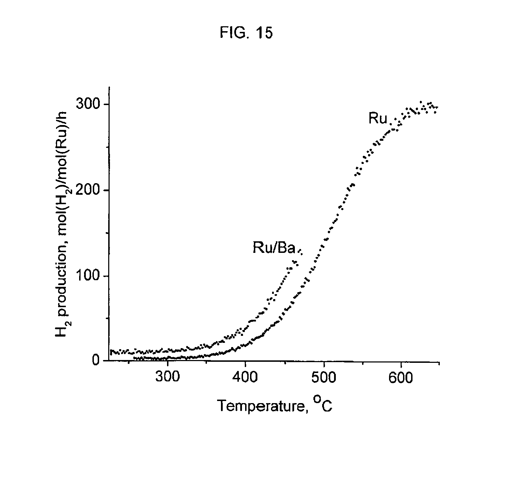

In this example it is demonstrated that ammonia decomposition may be carried out in micro fabricated reactors produced by photo lithography and dry etching on a silicon wafer. The reactors had internal volumes of 4 microlitres each and were sealed using Pyrex glass. In the reactors was placed a catalyst consisting of Ru or Ba promoted Ru supported on alumina. The catalytic activity in terms of hydrogen production pr mole Ru pr hour in these reactors is shown in FIG. L as function of reactor temperature. As appears from figure 15, the fraction of ammonia which is decomposed can be as high as 98% at 400°C.

## Claims

1. An electric power generating unit comprising
(I) an ammonia storage device in the form of a container comprising a solid ammonia absorbing and releasing metal salt complex of the general formula; Mₐ(NH₃)ₙX_{z}, wherein M is one or more cations selected from alkali metals such as Li, Na, K or Cs, alkaline earth metals such as Mg or Ca, and transition metals such as V, Cr, Mn, Fe, Co, Ni, Cu, or Zn or combinations thereof such as NaAl. KAl, K₂Zn. CsCu, or K₂Fe, X is one or more anions selected from fluoride, chloride, bromide, iodide, nitrate, thiocyanate, sulphate, molybdate, and phosphate ions, a is the number of cations per salt molecule, z is the number of anions per salt molecule, and n is the coordination number of 2 to 12,
(ii) means for heating said container and ammonia absorbing and releasing salt for releasing ammonia gas and
(iiia) a fuel cell for converting ammonia directly into electric power; or
(iiib1) a reactor for dissociating ammonia into hydrogen and nitrogen and
(iiib2) a fuel cell for converting hydrogen Into electric power.

2. The electric power generating unit according to claim 1 further comprising means for adding ammonia to saturate the ammonia absorbing and releasing salt with ammonia.

3. The electric power generating unit according to claim 1, wherein said ammonia absorbing and releasing salt is Mg(NH₃)₆Cl₂.

4. The electric power generating unit according to any of claims 1-3, where the salt is in the form of a fine powder of micro crystals or located on a porous support material.

5. The electric power generating unit according to any of claims 1-3, where the means for heating is in the form of an electrical resistive heating device.

6. The electric power generating unit according to any of claims 1-3, where said means for heating is provided by a heat produced by chemical reactions.

7. The electric power generating unit according to claim 1 where the container and means for heating are a part of a micro-size electric system being micro fabricated using processes such as mechanical grinding, chemical vapour deposition (CVD), plasma enhanced chemical vapour deposition (PECVD), electron cyclotron resonance (ECR), sputtering, etching, lithographic methods such as electron beam lithography, photo lithography, or laser lithography.

8. The power generating unit according to claim 1 where the reactor for dissociating ammonia contains a heterogeneous catalyst.

9. The power generating unit according to claims 8 where said heterogeneous catalyst comprises a support and an active phase.

10. The power generating unit according to claims 9 where said active phase comprises dispersed nanoparticles of transition metals or compounds thereof such as Co₃Mo₃N, Ru, Co, Nl and Fe or mixtures thereof.

11. The power generating unit according to any of claims 1-10 further comprising a combustion device wherein a part of the hydrogen produced in the reactor, unreacted hydrogen from the fuel cell or a mixture thereof is oxidized for providing heat for heating the ammonia storage device.

12. The power generating unit according to any of claims 1-10 further comprising a combustion device wherein a fraction of the hydrogen produced in the reactor, unreacted hydrogen from the fuel cell or a mixture thereof is oxidized for providing heat for heating said reactor for dissociating ammonia.

13. The power generating unit according to any of claims 1-10 further comprising a combustion device wherein a fraction of the ammonia released from the ammonia storage, unreacted ammonia from the fuel cell or a mixture thereof is oxidized for providing heat for heating said ammonia storage device.

14. The power generating unit according to any of claims 1-10 further comprising a combustion device wherein a fraction of the ammonia released from the ammonia storage, unreacted ammonia from the fuel cell or a mixture thereof is oxidized for providing heat for heating said reactor for dissociating ammonia.

15. The power generating unit according to any of claims 1-14 In the form of a micro-size power source for microelectronic devices or mlcro-electromechanical-systems (MEMS).

16. The power generating unit according to claim 1 where said reactor for dissociating ammonia is a part of a micro-size electric system being micro fabricated using processes such as mechanical grinding, chemical vapour deposition (CVD), plasma enhanced chemical vapour deposition (PECVD), electron cyclotron resonance (ECR), sputtering, etching, lithographic methods such as electron beam lithography, photo lithography, or laser lithography.

17. The power generating unit according to any of claims 1-10 where the reactor for dissociating ammonia is divided into two parts, one part operated at a low temperature that dissociates most ammonia and another part operated at a high temperature that dissociates the last present fraction of ammonia.

18. The use of an ammonia storage device In the form of a container comprising a solid ammonia absorbing and releasing metal salt complex of the general formula: Mₐ(NH₃)ₙX_{z}, wherein M is one or more cations selected from alkali metals such as Li, Na, K or Cs, alkaline earth metals such as Mg or Ca, and transition metals such as V, Cr, Mn, Fe, Co, Ni, Cu, or Zn or combinations thereof such as NaAl, KAl, K₂Zn, CsCu, or K₂Fe, X is one or more anions selected from fluoride, chloride, bromide, iodide, nitrate, thiocyanate, sulphate, molybdate, phosphate, and chlorate ions, a is the number of cations per salt molecule, z is the number of anions per salt molecule, and n is the coordination number of 2 to 12 as a source of energy in a electric power generating unit comprising
(1) means for hearing said container and ammonia absorbing and releasing salt for releasing ammonia gas,
(2a) a fuel cell for converting ammonia directly into electric power, or comprising
(2b1) a reactor for dissociating ammonia into hydrogen and nitrogen and
(2b2) a fuel cell for converting hydrogen into electric power.

19. The use according to claim 18 wherein the electric power generating unit according further comprises means for adding ammonia to saturate the ammonia absorbing and releasing salt with ammonia.

## Patentansprüche

1. Elektrischen Strom erzeugende Einheit, umfassend
(i) eine Ammoniak-Speichervorrichtung in Form eines Behälters, der einen festen, Ammoniak absorbierenden und freisetzenden Metallsalzkomplex der allgemeinen Formel: Mₐ(NH₃)ₙX_{z} umfasst, worin M für ein oder mehrere Kationen steht, die aus Alkalimetallen, wie Li, Na, K oder Cs, Erdalkalimetallen, wie Mg oder Ca, und Übergangsmetallen, wie V, Cr, Mn, Fe, Co, Ni, Cu oder Zn, oder Kombinationen derselben, wie NaAl, KAI, K₂Zn, CsCu oder K₂Fe ausgewählt sind, X für ein oder mehrere Anionen steht, die aus Fluorid-, Chlorid-, Bromid-, lodid-, Nitrat-, Thiocyanat-, Sulfat-, Molybdat- und Phosphat-Ionen ausgewählt sind, a die Zahl der Kationen pro Salzmolekül ist, z die Zahl der Anionen pro Salzmolekül ist und n die Koordinationszahl von 2 bis 12 ist,
(ii) Mittel zum Heizen des Behälters und Ammoniak absorbierenden und freisetzenden Salzes zur Freisetzung von Ammoniakgas und
(iiia) eine Brennstoffzelle zur direkten Umwandlung von Ammoniak in elektrischen Strom oder
(iiib1) einen Reaktor zum Dissoziieren von Ammoniak in Wasserstoff und Stickstoff und
(iiib2) eine Brennstoffzelle zum Umwandeln von Wasserstoff in elektrischen Strom.

2. Elektrischen Strom erzeugende Einheit nach Anspruch 1, weiter umfassend Mittel zur Zugabe von Ammoniak, um das Ammoniak absorbierende und freisetzende Salz mit Ammoniak zu sättigen.

3. Elektrischen Strom erzeugende Einheit nach Anspruch 1, bei der das Ammoniak absorbierende und freisetzende Salz Mg(NH₃)₆Cl₂ ist.

4. Elektrischen Strom erzeugende Einheit nach irgendeinem der Ansprüche 1-3, bei der das Salz in Form eines feinen Pulvers aus Mikrokristallen vorliegt oder auf einem porösen Trägermaterial angeordnet ist.

5. Elektrischen Strom erzeugende Einheit nach irgendeinem der Ansprüche 1-3, bei der das Mittel zum Heizen in Form einer elektrischen Widerstandsheizeinrichtung vorliegt.

6. Elektrischen Strom erzeugende Einheit nach irgendeinem der Ansprüche 1-3, bei der das Mittel zum Heizen durch Wärme bereitgestellt wird, die von chemischen Reaktionen erzeugt wird.

7. Elektrischen Strom erzeugende Einheit nach Anspruch 1, bei der der Behälter und das Mittel zum Heizen Teil eines elektrischen Systems mit Mikrogröße ist, das unter Verwendung von Verfahren wie mechanischem Mahlen, chemischer Dampfabscheidung (CVD), Plasma-gestützter chemischer Dampfabscheidung (PECVD), Elektronenzyklotronresonanz (ECR), Sputtern, Ätzen, lithographischen Verfahren, wie Elektronenstrahllithographie, Photolithographie oder Laserlithographie, mikro-hergestellt ist.

8. Strom erzeugende Einheit nach Anspruch 1, bei der der Reaktor zum Dissoziieren von Ammoniak einen heterogenen Katalysator enthält.

9. Strom erzeugende Einheit nach Anspruch 8, bei der der heterogene Katalysator einen Träger und eine aktive Phase umfasst.

10. Strom erzeugende Einheit nach Anspruch 9, bei der die aktive Phase dispergierte Nanopartikel von Übergangsmetallen oder deren Verbindungen, wie Co₃Mo₃N, Ru, Co, Ni und Fe oder deren Mischungen, umfasst.

11. Strom erzeugende Einheit nach irgendeinem der Ansprüche 1-10, ferner umfassend eine Verbrennungseinrichtung, bei der ein Teil des in dem Reaktor erzeugten Wasserstoffs, unumgesetzter Wasserstoff aus der Brennstoffzelle oder eine Mischung derselben zur Bereitstellung von Wärme für das Heizen der Ammoniakspeichervorrichtung oxidiert wird.

12. Strom erzeugende Einheit nach irgendeinem der Ansprüche 1-10, ferner umfassend eine Verbrennungseinheit, bei der ein Bruchteil des in dem Reaktor erzeugten Wasserstoffs, unumgesetzter Wasserstoff aus der Brennstoffzelle oder eine Mischung derselben zur Bereitstellung von Wärme zum Heizen des Reaktors zum Dissoziieren von Ammoniak oxidiert wird.

13. Strom erzeugende Einheit nach irgendeinem der Ansprüche 1-10, weiter umfassend eine Verbrennungseinrichtung, bei der ein Bruchteil des Ammoniaks, der aus dem Ammoniakspeicher freigesetzt wird, unumgesetzter Ammoniak aus der Brennstoffzelle oder eine Mischung derselben zur Bereitstellung von Wärme zum Heizen der Ammoniak-Speichervorrichtung oxidiert wird.

14. Strom erzeugende Einheit nach irgendeinem der Ansprüche 1-10, ferner umfassend eine Verbrennungseinrichtung, bei der ein Bruchteil des aus dem Ammoniakspeicher freigesetzten Ammoniaks, unumgesetzter Ammoniak aus der Brennstoffzelle oder eine Mischung derselben zur Bereitstellung von Wärme für das Heizen des Reaktors zum Dissoziieren von Ammoniak oxidiert wird.

15. Strom erzeugende Einheit nach irgendeinem der Ansprüche 1-14 in Form einer Stromquelle von Mikrogröße für mikroelektronische Vorrichtungen oder mikroelektromechanische Systeme (MEMS).

16. Strom erzeugende Einheit nach Anspruch 1, bei der der Reaktor zum Dissoziieren von Ammoniak Teil eines elektrischen Systems von Mikrogröße ist, das unter Verwendung von Verfahren wie mechanischem Mahlen, chemischer Dampfabscheidung (CVD), Plasma-gestützter chemischer Dampfabscheidung (PECVD), Elektronenzyklotronresonanz (ECR), Sputtern, Ätzen, lithographischen Verfahren, wie Elektronenstrahllithographie, Photolithographie oder Laserlithographie, mikro-hergestellt ist.

17. Strom erzeugende Einheit nach irgendeinem der Ansprüche 1-10, bei der der Reaktor zum Dissozieren von Ammoniak in zwei Teile aufgeteilt ist, einen Teil, der bei niedriger Temperatur betrieben wird, welcher den größten Teil des Ammoniaks dissoziiert, und einen anderen Teil, der bei hoher Temperatur betrieben wird, welche den letzten vorhandenen Bruchteil an Ammoniak dissoziiert.

18. Verwendung einer Ammoniak-Speichervorrichtung in Form eines Behälters, der einen festen, Ammoniak absorbierenden und freisetzenden Metallsalzkomplex der allgemeinen Formel: Mₐ(NH₃)ₙX_{z} umfasst, worin M für ein oder mehrere Kationen steht, die aus Alkalimetallen, wie Li, Na, K oder Cs, Erdalkalimetallen, wie Mg oder Ca, und Übergangsmetallen, wie V, Cr, Mn, Fe, Co, Ni, Cu oder Zn, oder Kombinationen derselben, wie NaAl, KAl, K₂Zn, CsCu oder K₂Fe ausgewählt sind, X für ein oder mehrere Anionen steht, die aus Fluorid-, Chlorid-, Bromid-, lodid-, Nitrat-, Thiocyanat-, Sulfat-, Molybdat-, Phosphat- und Chlorat-Ionen ausgewählt sind, a die Zahl der Kationen pro Salzmolekül ist, z die Zahl der Anionen pro Salzmolekül ist und n die Koordinationszahl von 2 bis 12 ist, als Energiequelle in einer elektrischen Strom erzeugenden Einheit, welche umfasst
(1) Mittel zum Heizen des Behälters und Ammoniak absorbierenden und freisetzenden Salzes zur Freisetzung von Ammoniakgas,
(2a) eine Brennstoffzelle zur direkten Umwandlung von Ammoniak in elektrischen Strom, oder welche umfasst
(2b1) einen Reaktor zum Dissoziieren von Ammoniak in Wasserstoff und Stickstoff und
(2b2) eine Brennstoffzelle zum Umwandeln von Wasserstoff in elektrischen Strom.

19. Verwendung nach Anspruch 18, bei der die elektrischen Strom erzeugende Einheit ferner Mittel zur Zugabe von Ammoniak umfasst, um das Ammoniak absorbierende und freisetzende Salz mit Ammoniak zu sättigen.

## Revendications

1. Unité de génération d'énergie électrique comprenant :
(i) un dispositif de stockage de l'ammoniac sous la forme d'un conteneur, comprenant un complexe de sel de métal absorbant et libérant de l'ammoniac solide de formule générale : Mₐ(NH₃)ₙX_{z}, dans laquelle M représente un ou plusieurs cations choisis parmi des métaux alcalins comme Li, Na, K, ou Cs, des métaux alcalino-terreux comme Mg ou Ca, et des métaux de transition comme V, Cr, Mn, Fe, Co, Ni, Cu, ou Zn ou des combinaisons de ceux-ci comme NaAl, KAl, K₂Zn, CsCu, ou K₂Fe, X représente un ou plusieurs anions choisis parmi des ions fluorure, chlorure, bromure, iodure, nitrate, thiocyanate, sulfate, molybdate et phosphate, a représente le nombre de cations par molécule de sel, z représente le nombre d'anions par molécule de sel, et n représente le nombre de coordination de 2 à 12,
(ii) un moyen pour chauffer ledit conteneur et le sel absorbant et libérant de l'ammoniac afin de libérer du gaz ammoniac, et
(iiia) une pile à combustible destinée à convertir l'ammoniac directement en énergie électrique, ou
(iiib1) un réacteur destiné à dissocier l'ammoniac en hydrogène et en azote, et
(iiib2) une pile à combustible destinée à convertir l'hydrogène en énergie électrique.

2. Unité de génération d'énergie électrique selon la revendication 1, comprenant en outre un moyen pour ajouter de l'ammoniac afin de saturer le sel absorbant et libérant de l'ammoniac avec de l'ammoniac.

3. Unité de génération d'énergie électrique selon la revendication 1, dans laquelle ledit sel absorbant et libérant de l'ammoniac est Mg(NH3)₆CL₂.

4. Unité de génération d'énergie électrique selon l'une quelconque des revendications 1 à 3, dans laquelle le sel est sous la forme d'une fine poudre de micro cristaux ou situé sur un matériau support poreux.

5. Unité de génération d'énergie électrique selon l'une quelconque des revendications 1 à 3, dans laquelle le moyen pour chauffer est sous la forme d'un dispositif de chauffage par résistance électrique.

6. Unité de génération d'énergie électrique selon l'une quelconque des revendications 1 à 3, dans laquelle ledit moyen pour chauffer est fourni par une chaleur produite par des réactions chimiques.

7. Unité de génération d'énergie électrique selon la revendication 1, dans laquelle le conteneur et le moyen pour chauffer sont une partie d'un système électrique de taille micrométrique qui est microfabriqué en utilisant des procédés comme le broyage mécanique, le dépôt chimique en phase vapeur (CVD), le dépôt chimique en phase vapeur assisté par plasma (PECVD), la résonance électronique cyclotronique (ECR), la pulvérisation, l'attaque chimique, des procédés lithographiques comme la lithographie par faisceau d'électrons, la lithographie optique, ou la lithographie au laser.

8. Unité de génération d'énergie électrique selon la revendication 1, dans laquelle le réacteur destiné à dissocier l'ammoniac contient un catalyseur hétérogène.

9. Unité de génération d'énergie électrique selon la revendication 8, dans laquelle ledit catalyseur hétérogène comprend un support et une phase active.

10. Unité de génération d'énergie électrique selon la revendication 9, dans laquelle ladite phase active comprend des nanoparticules dispersées de métaux de transition ou de composés de ceux-ci comme Co₃Mo₃N, Ru, Co, Ni, et Fe ou des mélanges de ceux-ci.

11. Unité de génération d'énergie électrique selon l'une quelconque des revendications 1 à 10, comprenant en outre un dispositif de combustion dans lequel une partie de l'hydrogène produite dans le réacteur, l'hydrogène n'ayant pas réagi provenant de la pile a combustible ou un mélange de celles-ci est oxydé afin de fournir de la chaleur pour chauffer le dispositif de stockage d'ammoniac.

12. Unité de génération d'énergie électrique selon l'une quelconque des revendications 1 à 10, comprenant en outre un dispositif de combustion dans lequel une fraction de l'hydrogène produite dans le réacteur, l'hydrogène n'ayant pas réagi provenant de la pile a combustible ou un mélange de celles-ci est oxydé afin de fournir de la chaleur pour chauffer ledit réacteur afin de dissocier l'ammoniac.

13. Unité de génération d'énergie électrique selon l'une quelconque des revendications 1 à 10, comprenant en outre un dispositif de combustion dans lequel une fraction de l'ammoniac libérée depuis le dispositif de stockage d'ammoniac, l'ammoniac n'ayant pas réagi provenant de la pile a combustible ou un mélange de celles-ci est oxydé pour fournir de la chaleur afin de chauffer ledit dispositif de stockage de l'ammoniac.

14. Unité de génération d'énergie électrique selon l'une quelconque des revendications 1 à 10, comprenant en outre un dispositif de combustion dans lequel une fraction de l'ammoniac libérée depuis le dispositif de stockage d'ammoniac, l'ammoniac n'ayant pas réagi provenant de la pile a combustible ou un mélange de celles-ci est oxydé pour fournir de la chaleur afin de chauffer ledit réacteur afin de dissocier l'ammoniac.

15. Unité de génération d'énergie électrique selon l'une quelconque des revendications 1 à 14 sous la forme d'une source d'énergie de taille micrométrique destinée aux dispositifs microélectroniques ou aux systèmes électromécaniques de taille micrométrique.

16. Unité de génération d'énergie électrique selon la revendication 1, dans laquelle ledit réacteur destiné à dissocier l'ammoniac est une partie d'un système électrique de taille micrométrique qui est microfabriqué en utilisant des procédés comme le broyage mécanique, le dépôt chimique en phase vapeur (CVD), le dépôt chimique en phase vapeur assisté par plasma (PECVD), la résonance électronique cyclotronique (ECR), la pulvérisation, l'attaque chimique, des procédés lithographiques comme la lithographie par faisceau d'électrons, la lithographie optique, ou la lithographie au laser.

17. Unité de génération d'énergie électrique selon l'une quelconque des revendications 1 à 10, dans laquelle le réacteur destiné à dissocier l'ammoniac est divisé en deux parties, une partie fonctionnant à basse température qui dissocie la plus grande partie de l'ammoniac et une autre partie fonctionnant à température élevée qui dissocie les dernières fractions présentes d'ammoniac.

18. Utilisation d'un dispositif de stockage de l'ammoniac sous la forme d'un conteneur, comprenant un complexe de sel de métal absorbant et libérant de l'ammoniac solide de formule générale : Mₐ(NH₃)ₙX_{z}, dans laquelle M représente un ou plusieurs cations choisis parmi des métaux alcalins comme Li, Na, K, ou Cs, des métaux alcalino-terreux comme Mg ou Ca, et des métaux de transition comme V, Cr, Mn, Fe, Co, Ni, Cu, ou Zn ou des combinaisons de ceux-ci comme NaAl, KAl, K₂Zn, CsCu, ou K₂Fe, X représente un ou plusieurs anions choisis parmi des ions fluorure, chlorure, bromure, iodure, nitrate, thiocyanate, sulfate, molybdate, phosphate et chlorate, a représente le nombre de cations par molécule de sel, z représente le nombre d'anions par molécule de sel, et n représente le nombre de coordination compris entre 2 et 12, en tant que source d'énergie dans une unité de génération d'énergie électrique comprenant :
(1) un moyen pour chauffer ledit conteneur et le sel absorbant et libérant l'ammoniac afin de libérer du gaz ammoniac,
(2a) une pile à combustible destinée de convertir l'ammoniac directement en énergie électrique, ou comprenant
(2b1) un réacteur destiné à dissocier l'ammoniac en hydrogène et en azote, et
(2b2) une pile a combustible destinée à convertir l'hydrogène en énergie électrique.

19. Utilisation selon la revendication 18, dans laquelle l'unité de génération d'énergie électrique comprend en outre un moyen pour ajouter de l'ammoniac afin de saturer le sel absorbant et libérant de l'ammoniac avec de l'ammoniac.
